(19) **Europäisches Patentamt**
**European Patent Office**
**Office européen des brevets**

(11) **EP 4 618 388 A1**

(12) **EUROPEAN PATENT APPLICATION**

(43) Date of publication:
**17.09.2025 Bulletin 2025/38**

(21) Application number: **25157871.2**

(22) Date of filing: **14.02.2025**

(51) International Patent Classification (IPC):
**H02M 1/32** *(2007.01)*        **H02M 7/219** *(2006.01)*
**H02M 1/44** *(2007.01)*        **H02M 1/00** *(2006.01)*
**H02M 1/12** *(2006.01)*

(52) Cooperative Patent Classification (CPC):
**H02M 1/32; H02M 1/0064; H02M 1/44;**
**H02M 7/219;** H02M 1/126

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **12.03.2024 GB 202403524**

(71) Applicant: **Rolls-Royce plc**
**London N1 9FX (GB)**

(72) Inventors:
• **Trainer, David**
**Derby DE24 8BJ (GB)**
• **Sweet, Mark**
**Derby DE24 8BJ (GB)**
• **Cox-Smith, Peter**
**Derby DE24 8BJ (GB)**

(74) Representative: **Rolls-Royce plc**
**Moor Lane (ML-9)**
**PO Box 31**
**Derby DE24 8BJ (GB)**

(54) **POWER ELECTRONICS CONVERTER**

(57)    A power electronics converter 720 comprising: an input terminal 701a; first and second DC output terminals 703, 704; a branch 721a comprising first and second semiconductor switches 705a, 706a connected in series between the first and second DC output terminals 703, 704, the input terminal 701a connected to a node 707a between the first and second semiconductor switches 705a, 706a; a DC link capacitor 708 connected between the first and second DC output terminals 703, 704; and a resistive damping element 701 connected in series with the DC link capacitor 708, wherein a damping factor of a circuit comprising the DC link capacitor 708, the resistive damping element 701 and an inductance of the circuit with a short between the output terminals 703, 704 is at least 1.

FIG. 7

**EP 4 618 388 A1**

## Description

## TECHNICAL FIELD

This disclosure relates to power electronics converters for use in electrical power systems, which may be of particular utility in transport applications including, but not limited to, aerospace.

## BACKGROUND

In aerospace, aircraft and their power and propulsion systems are becoming increasingly electric in their design. So-called 'more electric engines' (MEEs) and 'more electric aircraft' (MEAs) may derive all or substantially all of their propulsive thrust from turbomachinery but make greater use of electrical power compared with conventional platforms. They may, for example, use electrical power to power auxiliary systems which have previously been powered mechanically or pneumatically, or may use spool-coupled electrical machines to transfer power to, from and between engine spools to provide improvements in engine operability and efficiency. In hybrid electric aircraft, the propulsive thrust is derived from engines (e.g., gas turbine engines) and from other sources, typically batteries and/or fuel cells which supply electrical power to engine- or propulsor-coupled electrical machines.

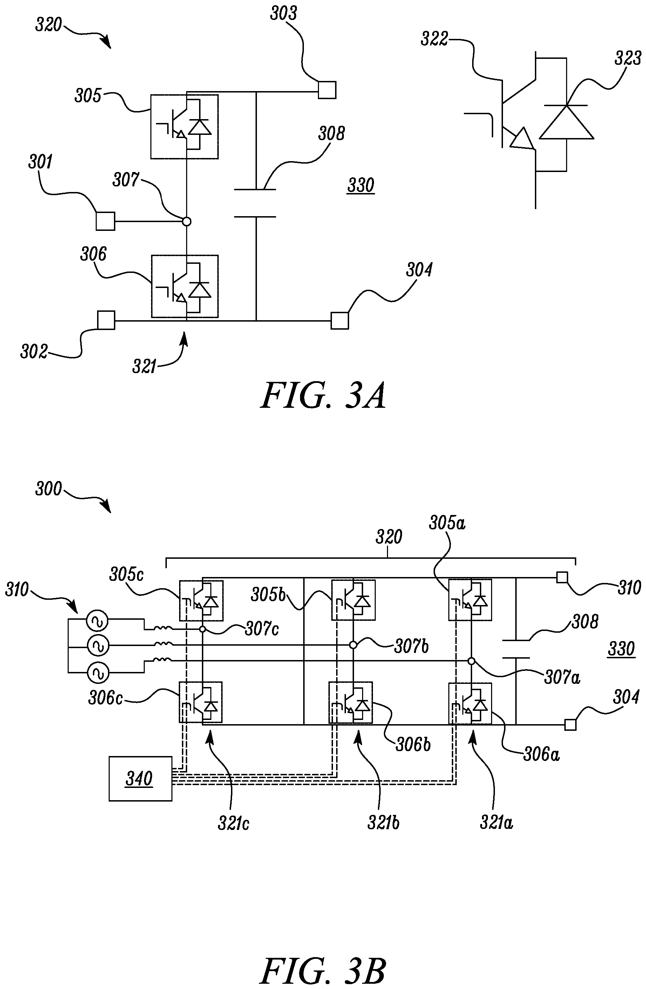

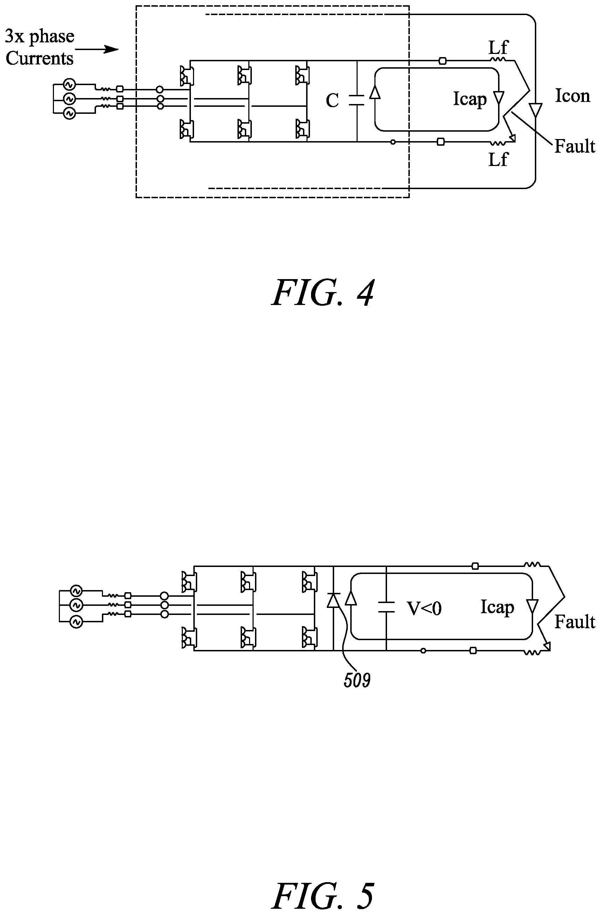

Some proposed platforms include DC electrical networks which receive electrical power from engine-driven electrical machines via AC to DC converters (i.e., rectifiers). FIG. 3B illustrates a typical arrangement in which a three-phase electrical generator 310, which may be coupled with and driven by a spool of a gas turbine engine, is connected with a DC network 330 via a two-level AC-DC converter 320. In the event of a DC-side fault, the voltage across the DC terminals collapses and two components of fault current flow: a first due to the discharge of the converter DC link capacitor 308 and a second from the AC side of the converter. The former may be very large and can damage the diodes of the converter, especially the so-called weak body diodes where MOSFETs are used. EP 4283851 A1 discloses several methods for protecting the diodes of a converter, one of which, shown in FIG. 5, involves connecting an additional diode across the DC terminals in parallel with the DC capacitor. This serves to protect the diodes of the converter against the high surge current stress delivered from the discharge of the DC link capacitor.

## SUMMARY

According to a first aspect, there is provided a power electronics converter comprising:

an input terminal;
first and second DC output terminals;
a branch comprising first and second semiconductor switches connected in series between the first and second DC output terminals, the input terminal connected to a node between the first and second semiconductor switches;
a DC link capacitor connected between the first and second DC output terminals; and
a resistive damping element connected in series with the DC link capacitor,
wherein a damping factor of a circuit comprising the DC link capacitor, the resistive damping element and an inductance of the circuit with a short between the output terminals is at least 1.

The resistive damping element may comprise a damping resistor connected in parallel with a damping inductor.

An impedance of the damping inductor may be at least ten times the impedance of the damping resistor at a resonant frequency of the circuit.

The resonant frequency $F_0$ of the circuit may be defined as

$$F_0 = \frac{1}{2\pi\sqrt{LC}}$$

where L is the inductance of the circuit with a short between the output terminals and C is a capacitance of the DC link capacitor.

A DC resistance of the damping inductor may be less than 10% of a resistance of the damping resistor.

The damping inductor may comprise:

a first inductor connected between a first terminal of the DC link capacitor and the first DC output terminal; and
a second inductor connected between a second terminal of the DC link capacitor and the second DC output terminal.

The first and second inductors may be magnetically coupled to each other.

The damping resistor may be a first damping resistor connected across the first inductor. The power electronics converter may comprise a second damping resistor connected across the second inductor.

The first and second inductors may be wound in opposing senses.

The first and second inductors may have differing numbers of turns.

The resistive damping element may comprise a forward biased diode connected in parallel across a damping resistor.

The power electronics converter may further comprise a reverse-biased DC link diode connected across the DC link capacitor.

In some examples, the first and second semiconductor switches may each comprise a transistor connected in anti-parallel with a diode. The transistor may be an IGBT or MOSFET.

In some examples, the first and second semiconductor switches may each consist of a MOSFET, i.e., with no diode connected in parallel. In such examples, the current capacity of the DC link diode is greater than that of the body diode of each MOSFET, for example between around 5 and 10 times greater.

Where the power electronics converter is an AC to DC converter, the power electronics converter may comprise a plurality of said branches connected between the first and second DC output terminals, the node between the first and second semiconductor switches of each branch being connectable to a respective phase of an electrical machine.

The power electronics converter may have a single branch for each phase, in which the second input terminal is connected to the second DC output terminal. The power electronics converter may alternatively comprise an H-bridge converter for each phase, in which the branch is a first branch, the power electronics converter comprising a second branch comprising first and second semiconductor switches connected in series between the first and second DC output terminals, the second input terminal connected to a node between the first and second semiconductor switches of the second branch.

The power electronics converter may be rated to convert over 30 kW of electrical power.

The power electronics converter may comprise a plurality of said branches connected between the first and second DC output terminals, the node between the first and second semiconductor switches of each branch being connectable to a respective phase of an electrical machine.

According to a second aspect there is provided an electrical power system comprising an electrical machine, a DC network and a power electronics converter according to the first aspect, the electrical machine connected to the node of the power electronics converter and the DC network connected across the first and second output terminals.

The electrical machine may comprise a plurality of phases and the power electronics converter a respective plurality of branches, each phase of the electrical machine connected to the node between the first and second semiconductor switches of a respective branch of the power electronics converter.

The electrical machine may for example comprise three phases. The power electronics converter may comprise three branches.

The electrical power system may comprise a controller configured to provide switching signals to each switch of the power electronics converter.

The controller may be configured to detect a DC fault in the DC network and, upon detecting the DC fault, open each of the semiconductor switches until a detected DC level across the DC network falls below a predefined threshold.

According to a fourth aspect, there is provided an aircraft power and propulsion system comprising: a gas turbine engine; and an electrical power system according to the second aspect. The electrical machine of the electrical power system is mechanically coupled with a spool of the gas turbine engine.

The power electronics converter may be a unidirectional AC to DC converter (i.e., a rectifier) or a bidirectional AC-DC converter capable of operating as either a rectifier or an inverter depending on an operating mode of the electrical machine.

According to a fifth aspect, there is provided an aircraft comprising the power and propulsion system of the fourth aspect. The aircraft may be a solely gas-turbine-powered aircraft (e.g., a more electric aircraft) or a hybrid electric aircraft.

The skilled person will appreciate that except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

## BRIEF DESCRIPTION OF THE DRAWINGS

Embodiments will now be described by way of example only with reference to the accompanying drawings, which are purely schematic and not to scale, and in which:

FIG. 1 shows a general arrangement of a turbofan engine for an aircraft;
FIG. 2A is a schematic illustration of a hybrid electric aircraft propulsion system;
FIG. 2B illustrates an electrically powered propulsor such as may be used in a hybrid electric propulsion system;
FIG. 3A illustrates one phase of an AC-DC converter;
FIG 3B illustrates a portion of an exemplary electrical power system in which an AC-DC converter connects a 3-phase electrical generator with a DC network;
FIG. 4 is a schematic circuit diagram of an example electrical power system with a DC load fault;
FIG. 5 is a schematic circuit diagram of an example electrical power system with a reverse biased diode across the DC link capacitor;
FIG. 6 illustrates voltage and current across a DC link capacitor over time following a DC load fault;
FIG. 7 is a schematic circuit diagram of an example power electronics converter with a resistive damping element;
FIG. 8 is a schematic circuit diagram of an example power electronics converter with a differential resistive damping element;
FIG. 9 is a schematic diagram illustrating common mode and differential mode inductors;

**FIG. 10** is a schematic circuit diagram of an example power electronics converter with a differential resistive damping element having a differential mode inductor; and

**FIG. 11** is a series of schematic circuit diagrams illustrating alternative resistive damping elements in series with a DC link capacitor for a power electronics converter.

## DETAILED DESCRIPTION

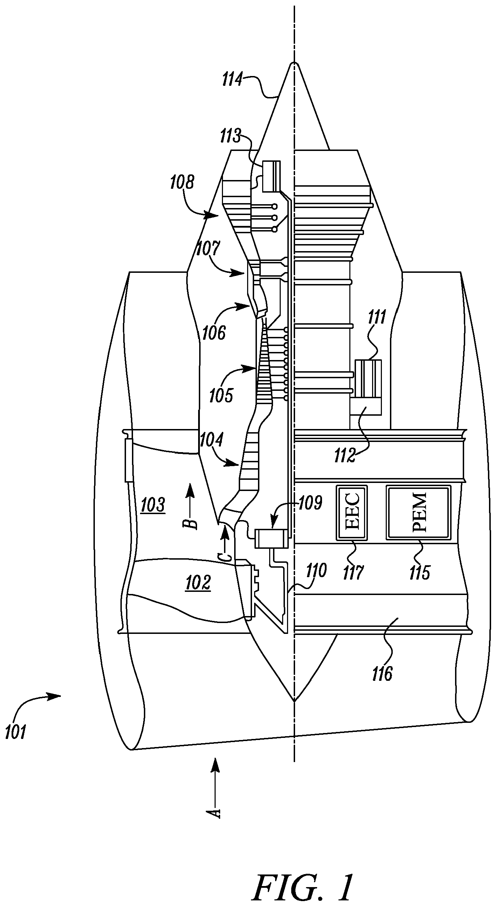

A general arrangement of an engine 101 for an aircraft is shown in FIG. 1. The engine 101 is of turbofan configuration, and thus comprises a ducted fan 102 that receives intake air A and generates two pressurised airflows: a bypass flow B which passes axially through a bypass duct 103 and a core flow C which enters a core gas turbine.

The core gas turbine comprises, in axial flow series, a low-pressure compressor 104, a high-pressure compressor 105, a combustor 106, a high-pressure turbine 107, and a low-pressure turbine 108.

In operation, the core flow C is compressed by the low-pressure compressor 104 and is then directed into the high-pressure compressor 105 where further compression takes place. The compressed air exhausted from the high-pressure compressor 105 is directed into the combustor 106 where it is mixed with fuel and the mixture is combusted. The resultant hot combustion products then expand through, and thereby drive, the high-pressure turbine 107 and in turn the low-pressure turbine 108 before being exhausted to provide a small proportion of the overall thrust.

The high-pressure turbine 107 drives the high-pressure compressor 105 via an interconnecting shaft. The low-pressure turbine 108 drives the low-pressure compressor 104 via another interconnecting shaft. Together, the high-pressure compressor 105, high-pressure turbine 107, and associated interconnecting shaft form part of a high-pressure spool of the engine 101. Similarly, the low-pressure compressor 104, low-pressure turbine 108, and associated interconnecting shaft form part of a low-pressure spool of the engine 101. Such nomenclature will be familiar to those skilled in the art. Those skilled in the art will also appreciate that whilst the illustrated engine has two spools, other gas turbine engines have a different number of spools, e.g., three spools.

The fan 102 is driven by the low-pressure turbine 108 via a reduction gearbox in the form of a planetary-configuration epicyclic gearbox 109. Thus, in this configuration, the low-pressure turbine 108 is connected with a sun gear of the gearbox 109. The sun gear is meshed with a plurality of planet gears located in a rotating carrier, which planet gears are in turn meshed with a static ring gear. The rotating carrier drives the fan 102 via a fan shaft 110. It will be appreciated that in alternative embodiments a star-configuration epicyclic gearbox (in which the planet carrier is static and the ring gear rotates and provides the output) may be used instead, and indeed that the gearbox 109 may be omitted entirely so that the fan 102 is driven directly by the low-pressure turbine 108.

It is increasingly desirable to facilitate a greater degree of electrical functionality on the airframe and on the engine. To this end, the engine 101 of FIG. 1 comprises one or more rotary electrical machines, generally capable of operating both as a motor and as a generator. The number and arrangement of the rotary electrical machines will depend to some extent on the desired functionality. Some embodiments of the engine 101 include a single rotary electrical machine 111 driven by the high-pressure spool, for example by a core-mounted accessory drive 112 of conventional configuration. Such a configuration facilitates the generation of electrical power for the engine and the aircraft and the driving of the high-pressure spool to facilitate starting of the engine in place of an air turbine starter. Other embodiments, including the one shown in FIG. 1, comprise both a first rotary electrical machine 111 coupled with the high-pressure spool and a second rotary electrical machine 113 coupled with the low-pressure spool. In addition to generating electrical power and the starting the engine 101, having both first and second rotary machines 111, 113, connected by power electronics, can facilitate the transfer of mechanical power between the high and lower pressure spools to improve operability, fuel consumption etc.

As mentioned above, in FIG. 1 the first rotary electrical machine 111 is driven by the high-pressure spool by a core-mounted accessory drive 112 of conventional configuration. In alternative embodiments, the first electrical machine 111 may be mounted coaxially with the turbomachinery in the engine 101. For example, the first electrical machine 111 may be mounted axially in line with the duct between the low- and high-pressure compressors 104 and 105. In FIG. 1, the second electrical machine 113 is mounted in the tail cone 114 of the engine 101 coaxially with the turbomachinery and is coupled to the low-pressure turbine 108. In alternative embodiments, the second rotary electrical machine 113 may be located axially in line with low-pressure compressor 104, which may adopt a bladed disc or bladed drum configuration to provide space for the second rotary electrical machine 113. It will of course be appreciated by those skilled in the art that any other suitable location for the first and (if present) second electrical machines may be adopted.

The first and second electrical machines 111, 113 are connected with power electronics. Extraction of power from or application of power to the electrical machines is performed by a power electronics module (PEM) 115. In the present embodiment, the PEM 115 is mounted on the fan case 116 of the engine 101, but it will be appreciated that it may be mounted elsewhere such as on the core of the gas turbine, or in the vehicle to which the engine 101 is attached, for example.

Control of the PEM 115 and of the first and second electrical machines 111 and 113 is in the present example performed by an engine electronic controller (EEC) 117. In the present embodiment the EEC 117 is a full-authority digital engine controller (FADEC), the configuration of which will be known and understood by those skilled in the art. It therefore controls all aspects of the engine 101, i.e., both of the core gas turbine and the first and second electrical machines 111 and 113. In this way, the EEC 117 may holistically respond to both thrust demand and electrical power demand.

The one or more rotary electrical machines 111, 113 and the power electronics 115 may be configured to output to or receive electric power from one, two or more dc busses. The dc busses allow for the distribution of electrical power to other engine electrical loads and to electrical loads on the airframe.

Those skilled in the art will appreciate that the gas turbine engine 101 described above may be regarded as a 'more electric' gas turbine engine because of the increased role of the electrical machines 111, 113 compared with those of conventional gas turbines.

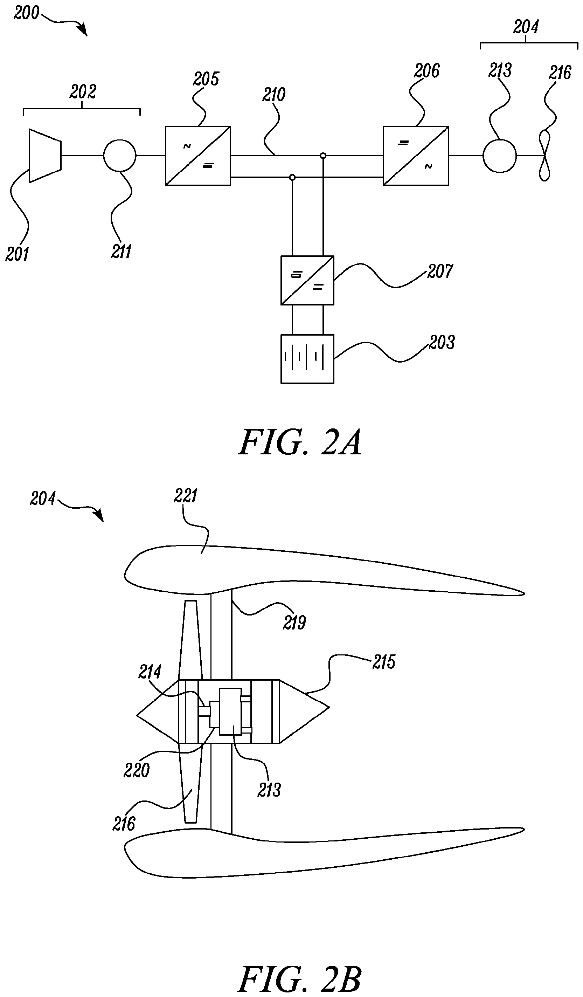

FIG. 2A illustrates an exemplary propulsion system 200 of a hybrid electric aircraft. The propulsion system 200 includes a generator set 202 comprising a gas turbine engine 201 and electrical generator 211, and a battery pack 203. Both the generator set 202 and the battery pack 203 are used as energy sources to power a motor-driven propulsor 204, an example of which is shown in FIG. 2B.

The illustrated propulsion system 200 further comprises an AC/DC converter 205, a dc distribution bus 210, a DC/AC converter 206 and a DC/DC converter 207. It will be appreciated that whilst one generator set 202 and one propulsor 204 are illustrated in this example, a propulsion system 200 may include more than one generator set 202 and/or one or more propulsor 204.

A shaft or spool of the engine 201 is coupled to and drives the rotation of a shaft of the generator 211 which thereby produces alternating current. The AC/DC converter 205, which faces the generator 211, converts the alternating current into direct current which is fed to various electrical systems and loads via the dc distribution bus 210. These electrical systems include non-propulsive loads (not shown in FIG. 2A) and the motor-driven propulsor 204, which comprises a motor 213 which drives a propulsor 204 via the DC/AC converter 206.

The battery pack 203, which may be made up of a number of battery modules connected in series and/or parallel, is connected to the dc distribution bus 210 via the DC/DC converter 207. The DC/DC converter 207 converts between a voltage of the battery pack 203 and a voltage of the dc distribution bus 210. In this way, the battery pack 203 can replace or supplement the power provided by the generator set 202 (by discharging and thereby feeding the DC distribution bus 210) or can be charged using the power provided by the generator set 202 (by being fed by the dc distribution bus 210).

Referring to FIG. 2B, in this example the propulsor 204 takes the form of a ducted fan. The fan 216 is enclosed within a fan duct 219 defined within a nacelle 221 and is mounted to a core nacelle 215. The fan 216 is driven by the electrical machine 213 via a drive shaft 214, both of which may also be thought of as components of the propulsor 204. In this embodiment a gearbox 220 is provided between the electrical machine 213 and the drive shaft 214.

The electrical machine 213 is supplied with electric power from a power source, for example the generator set 202 and/or the battery 203 via the dc bus 210. The electrical machine 213 of the propulsor, and indeed the electrical machine 211 of the generator set 202, may be of any suitable type, for example of the permanent magnet synchronous type.

Those skilled in the art will recognise the propulsion system 200 of FIGS. 2A-B to be of the series hybrid type. Other hybrid electric propulsion systems are of the parallel type, while still others are of the turboelectric type or have features of more than one type. The configuration of the more electric engine 101 of FIG. 1 may be considered similar to a parallel hybrid system, with the main distinction being the roles of the electrical machines. For example, the electrical machines of a more electric engine are generally only used in motor mode to start the engine and to improve engine operability, whereas the electric machines of a parallel hybrid propulsion system are used to motor the spools to meaningfully add to the amount of propulsive thrust produced by the turbomachinery.

Those skilled in the art will also appreciate that the hybrid architecture illustrated in FIG. 2A is only one example, and other architectures are known and will occur to those skilled in the art.

FIG. 3A illustrates an example power electronics converter 320 for converting an input AC or DC supply to an output DC supply or vice versa. The power electronics converter 320 comprises first and second input terminals 301, 302 for connection to an AC or DC supply and first and second DC output terminals 303, 304 for connection to a DC network 330. A branch 321 between the DC output terminals 303, 304 comprises first and second semiconductor switches 305, 306 connected in series between the first and second DC output terminals 303, 304. The first input terminal 301 is connected to a node 307 between the first and second switches 305, 306. In the example illustrated in FIG. 3A, the second input terminal 302 is connected to the second DC output terminal 304. A DC link capacitor 308 is connected between the first and second DC output terminals 303, 304 for smoothing the DC voltage across the DC network 330.

Each of the switches 305, 306 comprises a transistor 322 and reverse-biased diode 323, as also illustrated in FIG. 3A. The transistors may be IGBTs or may be bi-directional MOSFETs. The MOSFETs may be wide-bandgap MOSFETs comprising Silicon Carbide (SiC), though other suitable materials such as Gallium Nitride (GaN) or Gallium Arsenide (GaAs) could be used instead.

As will be understood by those skilled in the art, MOSFETs inherently have a diode character. This is usually referred to as the "body diode" or "weak body diode" of a MOSFET, and it is common to illustrate the body diode in a circuit illustration of a MOSFET. The diodes 323 illustrated in FIGS. 3A and 3B may therefore represent the body diode of a MOSFET, connected in parallel with the main transistor element 322 of the MOSFET. The switch thereby provides a bi-directional switchable conduction path between the source and drain terminals of the transistor 322. Each switch may alternatively comprise, in addition to its MOSFET with associated body diode, an additional separate reverse biased diode connected across the MOSFET. Omitting the separate diodes reduces component count and system mass but limits the MOSFET current carrying capacity.

The power electronics converter 320 illustrated in FIG. 3A may comprise part of a power electronics converter 320 having multiple phases. FIG. 3B shows an example electrical power system 300 comprising an electrical machine 310 and a DC network 330 with a power electronics converter 320 of the type illustrated in FIG. 3A but comprising multiple phases. The power electronics converter 320 comprises a plurality of branches 321a-c, each branch having first and second switches 305a-c, 306a-c of the type described above in relation to FIG. 3A. A node 307a-c of each branch is connected to a respective phase of the electrical machine 310, which in the illustrated example is an AC motor or generator having a corresponding number of phases, in this case three phases.

A controller 340 controls operation of the power electronics converter 320, principally by controlling the switching operation of each of the switches 305a-c, 306a-c. During normal operation, the controller 340 uses PWM control signals to commutate current between the diode of the first switch 305a-c of each branch 321a-c and the transistor (MOSFET) of the second switch 306a-c of each branch 321a-c. The DC network 330 provides the voltage required to reverse bias the diodes in the first switches 305a-c to allow for commutation of the AC current supplied by the electrical machine 310. This mode of operation does not make use of the bi-directional current carrying capability of MOSFETs when used in the switches 305a-c, 306a-c.

In an alternative mode of operation, which makes use of the bi-directional current capability of MOSFETs, the body diodes of each MOSFET are not used to conduct a majority of the current, although may conduct transiently during the very short commutation period. Current is commutated between the MOSFET of the first switches 305a-c conducting in a first direction (in this case the 'reverse' direction of the MOSFET) and the MOSFET of the second switches 306a-c conducting in a second opposite direction (in this case the 'forward' direction of the MOSFET). The controller 340 may switch between these two modes depending on the operating conditions of the electrical power system 300. For example, at lower operating currents (which may correspond to light loading of the DC network) the controller 340 may control the converter 320 to commutate current between the body diodes and MOSFETs, and switch to synchronous rectification mode once the operating current exceeds a predetermined limit.

It should be appreciated that the electrical power system 300 can also be operated in the synchronous rectifier mode, i.e., bi-directional conduction of the MOSFETs without conduction through the separate diodes, if present. However, higher switching frequencies may be attainable using the diodes so synchronous rectification may be less desirable in this system.

FIG. 4 illustrates a fault response of a six-switch AC to DC converter, which can operate as a rectifier or inverter. In the event of a pole-to-pole fault within the DC network, two components of fault current flow from the converter DC link capacitor and AC electrical system to the fault site.

The first component, $I_{CAP}$, is a large discharge current created by the fast discharge of the converter DC capacitor. This current may be of the order of tens of thousands of Amperes but typically only lasts for 10s to 100s of microseconds. Discharge of the DC link capacitor, $I_{CAP}$, follows an oscillatory waveform for the first quarter cycle at a resonant frequency that is determined by the capacitance of the DC link capacitor and a total inductance of the cables and filters in the connection path up to the fault itself. After this, the voltage will go negative and this reversal of the DC voltage created by the capacitor discharge can cause the converter diodes (or MOSFET body diodes) to turn-on in an uncontrolled manner and conduct this very large current, which in turn may lead to converter damage.

The second component, $I_{CON}$, is continuous and supplied to the fault site from the AC system, which may for example be a permanent magnet generator. This is rectified by the action of the AC-to-DC converter and is in practice limited by the impedance of the generator. This "follow-through" current is typically 10s to 100s of Amperes dependent on the rating of the generator and switching operation of the converter.

EP 4283851 A1 discloses several methods for protecting the body diodes in a converter of the type described above from the first component, $I_{CAP}$. One approach involves turning ON all of the converter MOSFETs as the voltage approaches zero, so that the initial high pulse of current is shared between the converter diodes and the reverse conducting MOSFETS. A challenge with this approach is that the voltage reversal occurs very quickly, typically within 10s of micro-seconds, and the initial surge pulse only lasts in the region of 10s to 100s of microseconds. Detecting the DC network fault and responding by turning ON all the MOSFETs on this timescale using existing fault detection techniques is challenging. A second approach, illustrated in FIG. 5, is a modification to the converter of FIGS. 3A-3B and 4 in which an additional diode 509 is connected across the DC terminals in parallel with the DC capacitor. This serves to protect the body diodes of the converter against the high surge current stress delivered from the discharged DC capacitor. These two approaches may be combined. Further details of these modifications are disclosed in EP 4283851 A1.

As noted above, discharge of the DC link capacitor 308 in a converter of the type illustrated in FIG. 4 follows an oscillatory waveform for the first quarter cycle at a resonant frequency that is determined by the capacitance of the DC link capacitor and a total inductance of the cables and filters in the connection path up to the fault itself, i.e., an inductance of a circuit comprising the DC link capacitor 308, together with any inductance in series with a short between the output terminals 303, 304 of the converter 320. This oscillatory response can be altered if resistance is included in the fault path such that the circuit becomes a L-C-R [inductive, capacitive, resistive] type. Under-damped, critically-damped and over-damped responses are possible.

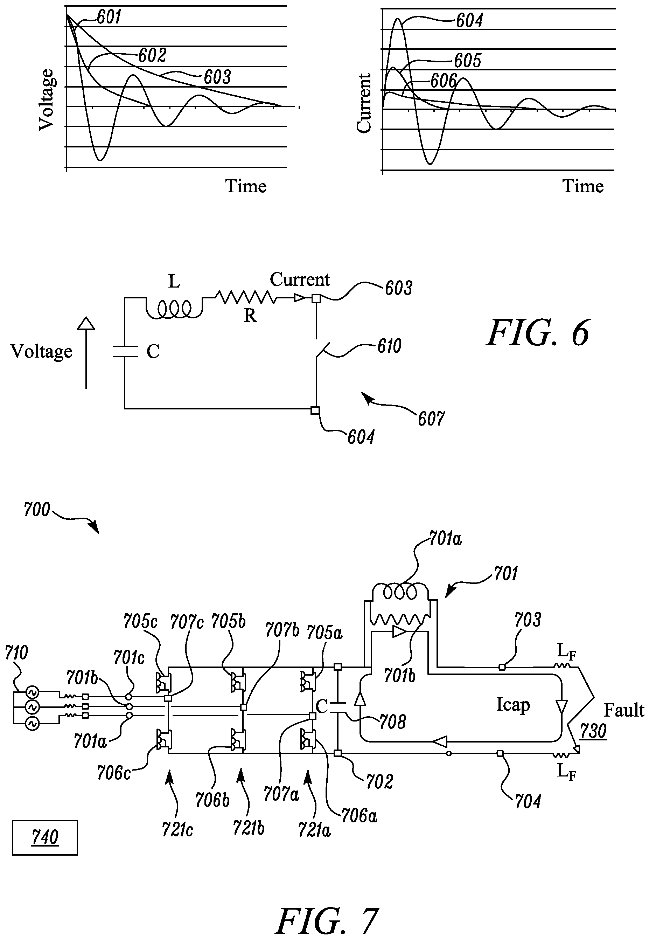

In the case of critically-damped and over-damped responses, the oscillatory voltage waveform does not go negative, meaning that the converter body diodes are not forced into conduction. FIG. 6 illustrates the three types of response for such an L-C-R circuit when subjected to a step change when the switch 610 in the circuit 607 is closed, corresponding to a short fault between the DC terminals 603, 604. It is to be understood that when the converter is connected to the DC link capacitor, a reverse biased diode would prevent the voltage going negative in the case of the under-damped response.

In the practical case of a power electronics converter connected to a DC electrical network, the values of the DC link capacitor and inductance (derived from the inductances of the filters and cables) will be known or at least measurable. It is therefore possible to calculate and add the minimum amount of damping resistance required to achieve critical damping in order to prevent the DC voltage from reversing and on the assumption that the fault itself has zero resistance. This minimises the power losses in the damping resistance and ensures an over-damped response in cases where the fault itself exhibits resistance, i.e., the overall damping resistance is higher.

Both the resonant frequency of the oscillations shown in FIG. 6 and the factors required for critical damping are dependent on the capacitance, inductance and resistance of the circuit 607 and are defined by the following equations:

$$F_0 = \frac{1}{2\pi\sqrt{LC}}$$

$$Damping\ Factor = \frac{R}{2}\sqrt{\frac{C}{L}}$$

where $F_0$ is the resonant frequency of the circuit, L the inductance of the circuit and C the capacitance value of the DC link capacitor. A value for the damping resistance R can thereby be derived with knowledge of these variable, such that the desired damping factor may be critically damped at a damping factor of 1 or over-damped with a damping factor of over 1.

To achieve critical damping of a practical aerospace DC system containing a capacitor of, for example, $200\mu F$ and an inductance of $0.64\mu H$ (corresponding to approximately 1m of cable), a resistance of $0.113\Omega$ would need to be introduced to achieve critical damping. For an AC-to-DC converter supplying 200A at $540V_{DC}$, the damping resistor would dissipate 4.52kW, which is 4.2% of the 108kW delivered to the DC network. Although possibly feasible, the requirement to dissipate such an amount of power as heat would be unattractive.

To address the issue of heat dissipation, the resistive damping element 701 may comprise a damping resistor 701b connected in parallel with a damping inductor 701a, as illustrated in the example electrical power system 700 comprising a power electronics converter 720 in FIG. 7. The components of the converter 720 may otherwise be similar to those in the converter 320 described above in relation to FIG. 3B. The electrical power system 700 also comprises a controller 740 having functionality similar to that described above in relation to FIG. 3B.

The converter 720 comprises first and second DC output terminals 703, 704 for connecting to a DC network 730. The converter 720 comprises three branches 721a-c, each comprising first and second semiconductor switches 705a-c, 706a-c connected in series between the first and second DC output terminals 703, 704. An input terminal 701a-c of each branch connects to a corresponding phase of an electrical machine 710 and is connected to a respective node 707a-c between the first and second semiconductor switches 705a-c, 706a-c. A second input terminal 702 for a multi-phase converter is common to each of the branches 721a-c. A DC link capacitor 708 is connected between the first and second DC output terminals 703, 704 and a resistive damping element 701 is connected in series with the DC link capacitor 708.

As with the converter 320 illustrated in FIG. 3B, the converter 720 also comprises a controller 740 for controlling switching of the semiconductor switches 705a-c, 706a-c during normal operation and, if appropriately configured, during a fault condition. The converter 702 may also in some examples comprise a reverse-biased DC link diode connected across the DC link capacitor 708.

The value of the damping inductor 701a may be selected to have a relatively high impedance at the resonant frequency $F_0$ created by the loop inductance and the DC link capacitance compared to that of the damping resistance. In this arrangement, the DC load current during normal operation of the converter 702 flows through the inductance 701a in preference to the damping resistor 701b, thereby minimising steady-state losses. However, during a fault, the inductance 701a appears as a high impedance to the fault current pulse at the resonant frequency $F_0$, meaning that current is diverted to the parallel resistor 701b allowing it to provide a damping function during the fault. This prevents the DC voltage from reversing and avoids commutation of the DC capacitor discharge current to the converter body diodes.

The inductive impedance of the damping circuit may be at least ten times that of the damping resistance, and preferably higher if the design allows. In a particular example, for a damping resistor of $0.113\Omega$ and a resonant frequency of 14kHz, the value for the inductor 701a may be chosen to be at least $12.8\mu H$. In a general aspect, in particular examples the damping resistor may have a resistance of less than around $0.2\Omega$ and the damping inductor may have an inductance of at least around $10\mu H$.

For normal load conditions, i.e., with no fault, the damping circuit experiences a direct current. In the above example, the DC current may be up to around 200A. The impedance of the inductor is nominally close to zero under DC conditions and may have a low resistance compared to the parallel damping resistance to ensure the DC load current flows primarily through the inductor 701a. The inductor 701a may be designed to have a resistance of less than 10% of that of the damping resistor, i.e., in the example above of less than around $0.0113\Omega$ to ensure high efficiency.

The load current initially flowing in the inductor 701a must transiently support the full voltage of the capacitor 708 when a fault occurs, which reduces as the capacitor 708 discharges its stored energy during a fault condition. Therefore, suitable designs of inductor are required that do not allow the magnetic core to saturate, which may require the addition of an air gap to the core to increase the magnetic reluctance, i.e., to increase the magnetic resistance. Such methods can be used where magnetic components are used in DC networks for filtering. Alternatively, the damping circuit could be realised with an air-cored inductor which does not suffer magnetic saturation, although these components tend to be larger than those with a magnetic core and suffer from the problems of uncontained magnetic flux flow outside of the winding.

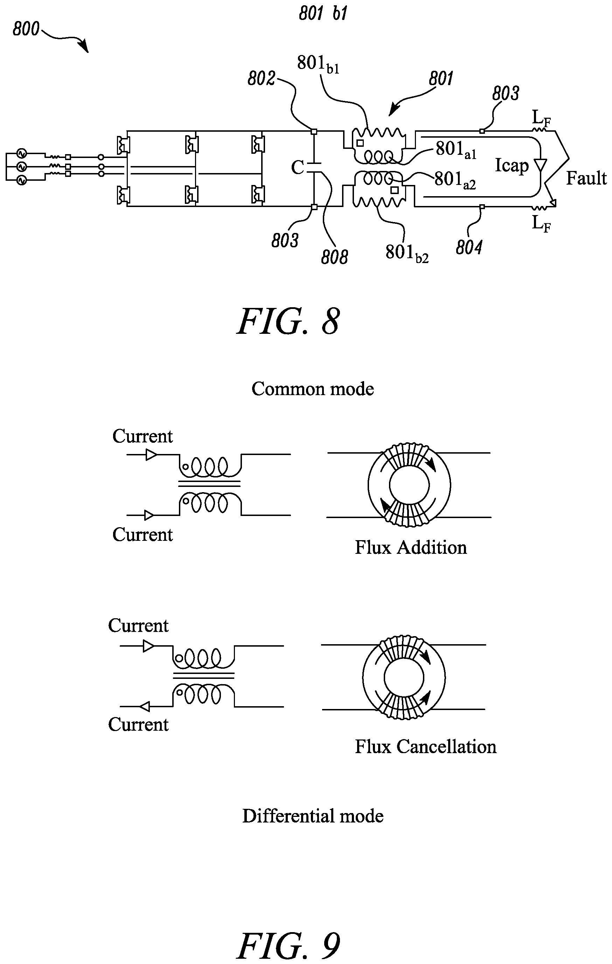

In some examples, the power electronics converter may be designed to operate either in a differential mode or a common mode to satisfy power quality and EMC standards set by the aircraft electrical power system and associated loads. Differential filtering can be achieved by connecting inductance in one or both DC lines, which acts to reduce AC ripple currents flowing into the DC network. In some arrangements, the inductance in series with both positive and negative DC lines may share the same magnetic core with the current flow in both lines creating two magnetic fluxes that add together. FIG. 8 illustrates an example power electronics converter 800 comprising a damping element 801 having a differential inductor with first and second inductors $801_{a1}$, $801_{a2}$. The first inductor $801_{a1}$ is connected between a first terminal 802 of the DC link capacitor 808 and the first DC output terminal 803. The second inductor $801_{a2}$ is connected between a second terminal 803 of the DC link capacitor 808 and the second DC output terminal 804.

The damping resistance may be added in parallel with one or both windings of the inductor, with the example in FIG. 8 illustrating a damping resistor $801_{b1}$ connected in parallel across the first inductor $801_{a1}$ and a second damping resistor $801_{b2}$ connected across the second inductor $801_{a2}$.

In the arrangement shown in FIG. 8, a low impedance fault across the DC output terminals 803, 804 would cause the DC link capacitor 808 to discharge, causing a high current to flow out of the positive DC terminal 803 and back into the negative terminal 804. In such a situation, the differential mode inductor would present a high inductive impedance during the discharge transient, allowing the damping resistor to function as desired. This approach is beneficial in that the existing differential mode inductor may already be present and the adjustment only requires a damping resistor to be added to one or both sides of the inductor.

The inductor arrangement may be in either common mode or differential mode. Common-mode inductors are similar to differential mode inductors, but with the windings wound in the opposite sense. This means that the magnetic flux contributed by the current and with identical number of turns in the two windings cancel in the magnetic core during normal operation but add when current in the positive and negative lines are in the same direction. This means the inductor presents a high impedance to common-mode current flow but would offer virtually no impedance to the discharge current from the DC link capacitor 808. The difference in operation between a common-mode inductor and a differential mode inductor is illustrated schematically in FIG. 9.

In order to avoid complete cancellation of the magnetic flux during a DC link capacitor discharge event, which drives a differential current, the number of turns between the two sets of windings may be different. In doing so, the Ampere-turns contributed by each winding is different, meaning that the two opposing magnetic fluxes do not completely cancel. As such, there remains a finite differential inductive impedance to assist with the damping operation and a high common-mode impedance as is required to satisfy the electrical power system. An example of a power electronics converter 1000 with an unbalanced common-mode inductor having first and second inductors $1001_{a1}$, $1001_{a2}$ with differing num-

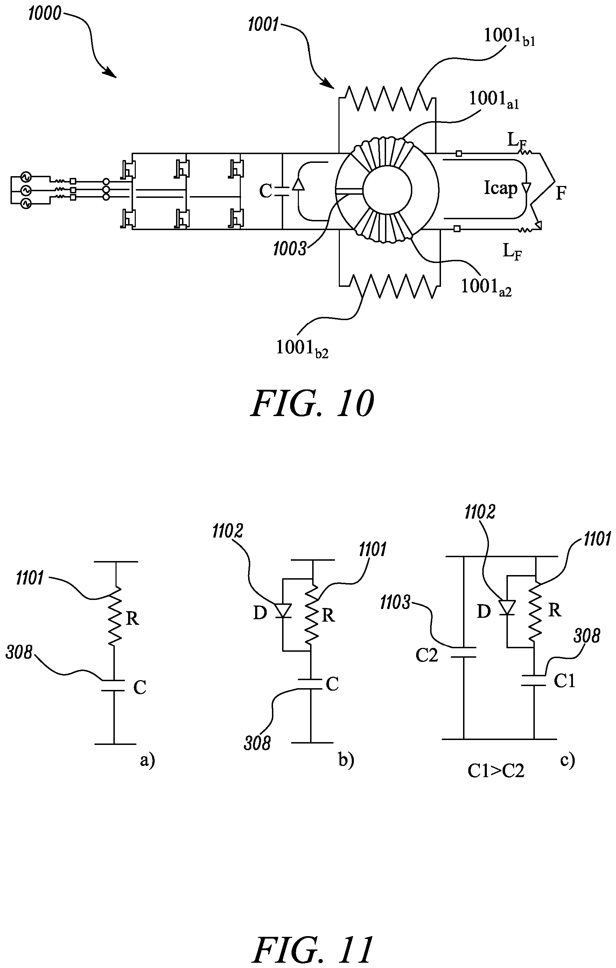

bers of turns is illustrated in FIG. 10. In a particular example, the first inductor $1001_{a1}$ may have 10 turns while the second inductor $1001_{a2}$ has 9 turns. An air gap 1003 is present in the magnetic core 1004 linking the inductors $1001_{a1}$, $1001_{a2}$. As with the example illustrated in FIG. 8, the damping element 1001 comprises a first damping resistor $1001_{b1}$ connected across the first inductor $1001_{a1}$ and a second damping resistor $1001_{b2}$ connected across the second inductor $1001_{a2}$. In alternative examples, a single damping resistor may be connected across one of the first and second inductors $1001_{a1}$, $1001_{a2}$.

In alternative arrangements, the resistive damping may be connected in series with the converter DC link capacitor itself, which places the resistor in a part of the circuit where the current is low compared to the main DC lines. This results in the benefit that the resistor only conducts AC ripple currents during normal operation and will therefore result in relatively lower power losses compared to the resistor being situated in the main DC power lines. A disadvantage of this arrangement is that the DC link capacitor is decoupled from the AC to DC converter, which could be compensated for by adding another small capacitor in parallel. Furthermore, as the damping is only required during the DC capacitor discharge transient, the resistor could be bypassed by a diode in the charging direction. These possibilities are illustrated in FIG. 11. In FIG. 11a, the damping resistor 1101 is in series with the DC link capacitor 308. In FIG. 11b a forward-biased diode 1102 is connected in parallel with the damping resistor 1101. In FIG. 11c a second DC link capacitor 1103 is connected in parallel with the first DC link capacitor 308 and the damping resistor 1101 and diode 1102. The value of the second capacitor 1103 is smaller than the value of the first DC link capacitor 308.

There are various advantages of the power electronics converter arrangements described herein, which include the following.

Firstly, the arrangements provide simple and robust ways of applying transient damping in order to protect the body diodes of the converter during a fault event.

Secondly, the arrangements do not require active control or sensing. The circuit elements can be tuned at the design and manufacturing stage with the addition of a suitable damping resistance. Once in place, the converter becomes self-protecting.

Thirdly, the damping resistor being connected in parallel with a low resistance inductor in one or both of the DC power lines allows the DC load current to bypass the damping resistor in normal operation but introduction of the resistor during the capacitor discharge event where the current is rapidly changing, i.e. with a high di/dt. This means the power losses in the damping resistor during normal operation are minimised.

Fourthly, it is possible to incorporate the required damping resistance into existing differential and/or common-mode filters with minimal change to the existing hardware.

Finally, it may also be possible to add some or all of the resistive damping in the DC capacitor circuit where less current flows in normal operation, thereby resulting in improved efficiency.

Various examples have been described, each of which feature various combinations of features. It will be appreciated by those skilled in the art that, except where clearly mutually exclusive, any of the features may be employed separately or in combination with any other features and the invention extends to and includes all combinations and sub-combinations of one or more features described herein.

It should also be noted that whilst the embodiments have been described with reference to an aircraft, and to turbofan engines, it will be understood that the principles of the described electrical systems may be applied to other installations, for example to aircraft with turboprop engines, aircraft with purely electric power and propulsion systems, to marine environments such as on a naval vessel powered by gas turbines, a hybrid system or purely electric system, and to other transport applications including trains.

**Claims**

1. A power electronics converter (720) comprising:

   an input terminal (701a);
   first and second DC output terminals (703, 704);
   a branch (721a) comprising first and second semiconductor switches (705a, 706a) connected in series between the first and second DC output terminals (703, 704), the input terminal (701a) connected to a node (707a) between the first and second semiconductor switches (705a, 706a);
   a DC link capacitor (708) connected between the first and second DC output terminals (703, 704); and
   a resistive damping element (701) connected in series with the DC link capacitor (708),
   wherein a damping factor of a circuit comprising the DC link capacitor (708), the resistive damping element (701) and an inductance of the circuit with a short between the output terminals (703, 704) is at least 1.

2. The power electronics converter (720) of claim 1, wherein the resistive damping element (701) comprises a damping resistor (701b) connected in parallel with a damping inductor (701a).

3. The power electronics converter (720) of claim 2, wherein an impedance of the damping inductor (701a) is at least ten times the impedance of the damping resistor (701b) at a resonant frequency of the circuit.

4. The power electronics converter (720) of claim 3, wherein the resonant frequency $F_0$ of the circuit is defined as

$$F_0 = \frac{1}{2\pi\sqrt{LC}}$$

where L is the inductance of the circuit with a short between the output terminals (703, 704) and C is a capacitance of the DC link capacitor (708).

5. The power electronics converter (720) of claim 3 or claim 4, wherein a DC resistance of the damping inductor (701a) is less than 10% of a resistance of the damping resistor (701b).

6. The power electronics converter (800) of any one of claims 2 to 5, wherein the damping inductor comprises:

   a first inductor ($801_{a1}$) connected between a first terminal (802) of the DC link capacitor (808) and the first DC output terminal (803); and
   a second inductor ($801_{a2}$) connected between a second terminal (803) of the DC link capacitor (808) and the second DC output terminal (804).

7. The power electronics converter (800) of claim 6, wherein the first and second inductors ($801_{a1}$, $801_{a2}$) are magnetically coupled to each other.

8. The power electronics converter (800) of claim 6 or claim 7, wherein the damping resistor is a first damping resistor ($801_{b1}$) connected across the first inductor ($801_{a1}$).

9. The power electronics converter (800) of any one of claims 6 to 8, wherein the first and second inductors ($801_{a1}$, $801_{a2}$) are wound in opposing senses.

10. The power electronics converter of claim 1, wherein the resistive damping element comprises a forward biased diode (1102) connected in parallel across a damping resistor (1101).

11. The power electronics converter of any preceding claim, further comprising a reverse-biased DC link diode (509) connected across the DC link capacitor (308).

12. The power electronics converter (720) of any one of the preceding claims, wherein the power electronics converter (720) is an AC to DC converter and comprises a plurality of said branches (721a-c) connected between the first and second DC output terminals (703, 704), the node (707a-c) between the first and second semiconductor switches (705a-c, 706a-c) of each branch (721a-c) being connectable to a respective phase of an electrical machine (710).

13. An electrical power system (700) comprising:

   an electrical machine (710);
   a DC network (730); and
   a power electronics converter (720) according to any one of claims 1 to 14,
   wherein the electrical machine (710) is connected to the node (707a) of the power electronics converter (720) and the DC network (730) is connected across the first and second output terminals (703, 704).

14. The electrical power system (700) of claim 13 further comprising a controller (740) configured to provide switching signals to each switch (705a-c, 706a-c) of the power electronics converter (720).

15. The electrical power system (700) of claim 14, wherein the controller (740) is configured to detect a DC fault in the DC network (730) and, upon detecting the DC fault, open each of the semiconductor switches (705a-c, 706a-c) until a detected DC level across the DC network (730) falls below a predefined threshold.

*FIG. 1*

FIG. 2A

FIG. 2B

**FIG. 3A**

**FIG. 3B**

*FIG. 4*

*FIG. 5*

*FIG. 6*

*FIG. 7*

*800*

*801 b1*

*802*    *801*<sub>b1</sub>    *801*    *803*    $L_F$

C    *801*<sub>a1</sub>    Icap    Fault

*801*<sub>a2</sub>

*803*    *808*    *801*<sub>b2</sub>    *804*    $L_F$

# FIG. 8

Common mode

Current

Current

Flux Addition

Current

Current

Flux Cancellation

Differential mode

# FIG. 9

**FIG. 10**

**FIG. 11**

# EP 4 618 388 A1

**Europäisches Patentamt**
**European Patent Office**
**Office européen des brevets**

## EUROPEAN SEARCH REPORT

**Application Number**

EP 25 15 7871

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 961 440 A (ECONOMIC TECH RESEARCH INSTITUTE OF STATE GRID HUBEI ELECTRIC POWER CO) 27 October 2023 (2023-10-27) | 1-9,12 | INV.<br>H02M1/32<br>H02M7/219 |
| Y | * abstract *<br>* paragraph [0001] - paragraph [0185]; figures 1-8 * | 10,11,<br>13-15 | H02M1/44<br>H02M1/00 |
| | ----- | | ADD. |
| Y | EP 4 283 851 A1 (ROLLS ROYCE PLC [GB]) 29 November 2023 (2023-11-29)<br>* abstract *<br>* paragraph [0001] - paragraph [0092]; figures 1-11 * | 11,13-15 | H02M1/12 |
| | ----- | | |
| A | HEE-SEUNG KIM ET AL: "A new asymmetrical winding common mode choke capable of attenuating differential mode noise", POWER ELECTRONICS AND ECCE ASIA (ICPE&ECCE), 2011 IEEE 8TH INTERNATIONAL CONFERENCE ON, IEEE, 30 May 2011 (2011-05-30), pages 440-445, XP031956170, DOI: 10.1109/ICPE.2011.5944574 ISBN: 978-1-61284-958-4<br>* abstract *<br>* sections I-V; figures 1-9 * | 1-15 | |
| | ----- | | **TECHNICAL FIELDS SEARCHED (IPC)**<br><br>H02M |
| Y | US 2009/122580 A1 (STAMM THOMAS [US] ET AL) 14 May 2009 (2009-05-14) | 10 | |
| A | * abstract *<br>* paragraph [0001] - paragraph [0027]; figures 1-7 * | 8 | |
| | ----- | | |
| | -/-- | | |

The present search report has been drawn up for all claims

| Place of search | Date of completion of the search | Examiner |
|---|---|---|
| The Hague | 10 July 2025 | Adami, Salah-Eddine |

EPO FORM 1503 03.82 (P04C01)

page 1 of 2

Europäisches
Patentamt

European
Patent Office

Office européen
des brevets

## EUROPEAN SEARCH REPORT

**Application Number**

EP 25 15 7871

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN LEI ET AL: "Application and Design of a Resistive-Type Superconducting Fault Current Limiter for Efficient Protection of a DC Microgrid", IEEE TRANSACTIONS ON APPLIED SUPERCONDUCTIVITY, IEEE, USA, vol. 29, no. 2, 1 March 2019 (2019-03-01), pages 1-7, XP011694698, ISSN: 1051-8223, DOI: 10.1109/TASC.2018.2882228 [retrieved on 2018-12-20] | 1-9,12 | |
| Y | * abstract * * sections I-V; figures 1-11 * | 10,11, 13-15 | |

----- 

TECHNICAL FIELDS SEARCHED (IPC)

The present search report has been drawn up for all claims

| Place of search | Date of completion of the search | Examiner |
|---|---|---|
| The Hague | 10 July 2025 | Adami, Salah-Eddine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................
& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 25 15 7871

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2025

| Patent document cited in search report | | Publication date | Patent family member(s) | | Publication date |
|---|---|---|---|---|---|
| CN 116961440 | A | 27-10-2023 | NONE | | |
| EP 4283851 | A1 | 29-11-2023 | EP 4283851 A1 | | 29-11-2023 |
| | | | US 2023373319 A1 | | 23-11-2023 |
| US 2009122580 | A1 | 14-05-2009 | NONE | | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4283851 A1